# EUROPEAN PATENT SPECIFICATION

(11) **EP 1 576 301 B1**
(45) Date of publication and mention of the grant of the patent: **05.12.2007**
(21) Application number: 02808320.2
(22) Date of filing: 24.12.2002
(51) Int. Cl.: F16D 65/12, B22C 7/06, B22C 9/10

(54) **MOULD AND METHOD FOR THE MANUFACTURE OF A BRAKING BAND OF COMPOSITE MATERIAL WITH VENTILATION DUCTS AND HOLES IN THE FIRCTION SURFACES**
FORM UND VERFAHREN ZUR HERSTELLUNG EINES BREMSBANDES AUS VERBUNDWERKSTOFF MIT BELÜFTUNGSKANÜLEN UND LÖCHERN IN DEN REIBFLÄCHEN
MOULE ET PROCEDE DE FABRICATION D'UNE BANDE DE FREINAGE EN MATERIAU COMPOSITE A CONDUITS DE VENTILATION ET A OUVERTURES MENAGEES DANS LES SURFACES DE FRICTION

(43) Date of publication of application: 21.09.2005
(73) Proprietor: Freni Brembo S.p.A., 24035 Curno (Bergamo) (IT)
(72) Inventor: GOLLER, Ralf, Siegfried, I-24124 Bergamo (IT); MAURI, Bernardino, I-23900 Lecco (IT)
(74) Representative: Crippa, Paolo Ernesto
(86) International application number: PCT/IT2002/000831
(87) International publication number: WO 2004/059186

(56) References cited:
- EP-A- 1 079 135
- WO-A-02/051771
- WO-A-03/012311
- DE-A- 10 142 768
- PATENT ABSTRACTS OF JAPAN vol. 2000, no. 14, 5 March 2001 (2001-03-05) & JP 2000 317609 A (HONDA MOTOR CO LTD), 21 November 2000 (2000-11-21)

## Description

The subject of the present invention is a mould and a method for the manufacture of a braking band of composite material, and in particular made of C/SiC type ceramic material, for a disk for a disk brake, wherein said braking band has ventilation ducts with openings which open into the friction surfaces.

The known methods for obtaining a braking band with ventilation ducts which open into the friction surfaces provide for the moulding of the braking band as a solid body, similar to that of the unventilated disk brake, or with radial ventilation ducts, and the subsequent production of holes in the friction surfaces.

However, the drilling of the braking band is very expensive and difficult because of the hardness of the materials used. Moreover, this mechanical work within the braking band is much less controllable compared with the working of the outer surfaces of the band. Consequently, during this work the formation of sharp edges or even cracks, intolerable having regard to the intrinsic fragility of the materials used, cannot be excluded.

The aforesaid technological difficulties and also the costs arising therefrom, reduce the competitiveness of the braking bands of composite material with ventilation ducts, compared with solid disks. Consequently, there has been a requirement to provide the equipment and a method for the production of such braking bands of composite material, with ventilation ducts, which are particularly simple and which guarantee a product of optimum quality, and also braking bands obtained by means of such equipment and method.

A mould according to the preamble of claim 1 is disclosed in 782000-317609 A.

The aim of the present invention is therefore that of devising a mould for obtaining braking bands of composite material, with ventilation ducts, which ventilation ducts have portions which open into the friction surfaces, such as to fulfil the requirements mentioned above and at the same time to remedy the drawbacks cited with reference to the prior art.

The aim stated above is fulfilled by means of a mould for moulding braking bands of composite material, with ventilation ducts, comprising a first half-mould having a first impression surface, a second half-mould having a second impression surface, wherein said first and second half-mould are movable towards each other and said first and second impression surface, together with suitable containment means, define a moulding cavity having the shape of the braking band and of which said first and second impression surface shape the friction surfaces, wherein said first half-mould comprises one or more pin members extensible into a working position, in which they protrude from the first impression surface into the moulding cavity, and retractable into a rest position which allows the extraction of the braking band from the mould.

For better understanding of the invention, a description is given hereinafter of some of its nonlimiting exemplary embodiments illustrated in the appended drawings, in which:
Figures 1a, 1b and 1c show, in diagrammatic cross-section, a mould according to a first embodiment of the invention in various stages of operation;

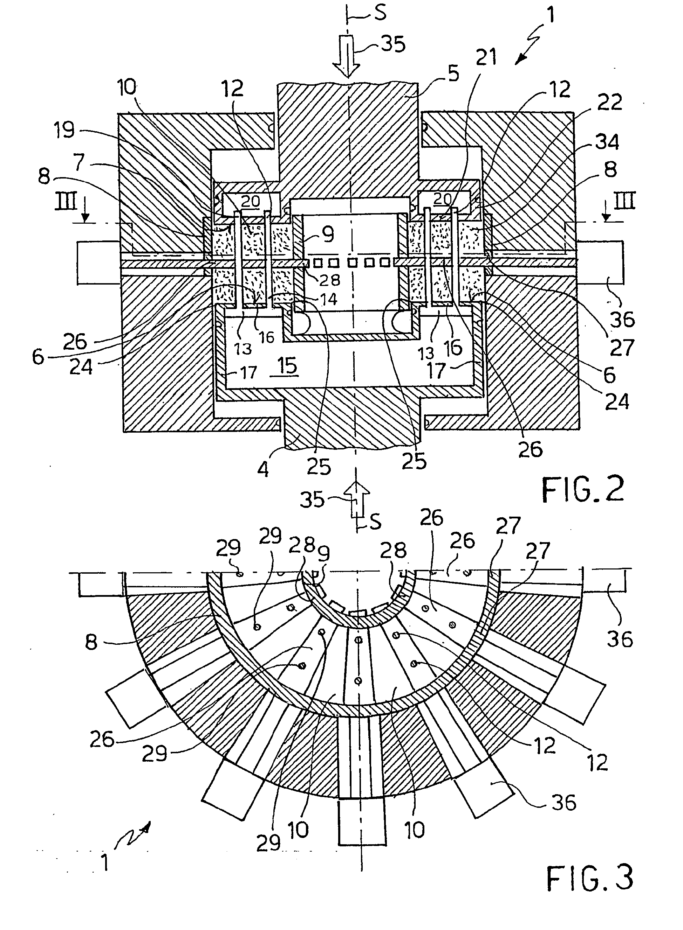

Figure 2 shows in cross-section a mould according to a second embodiment of the invention;
Figure 3 is a section along the line III-III of the mould in Figure 2;

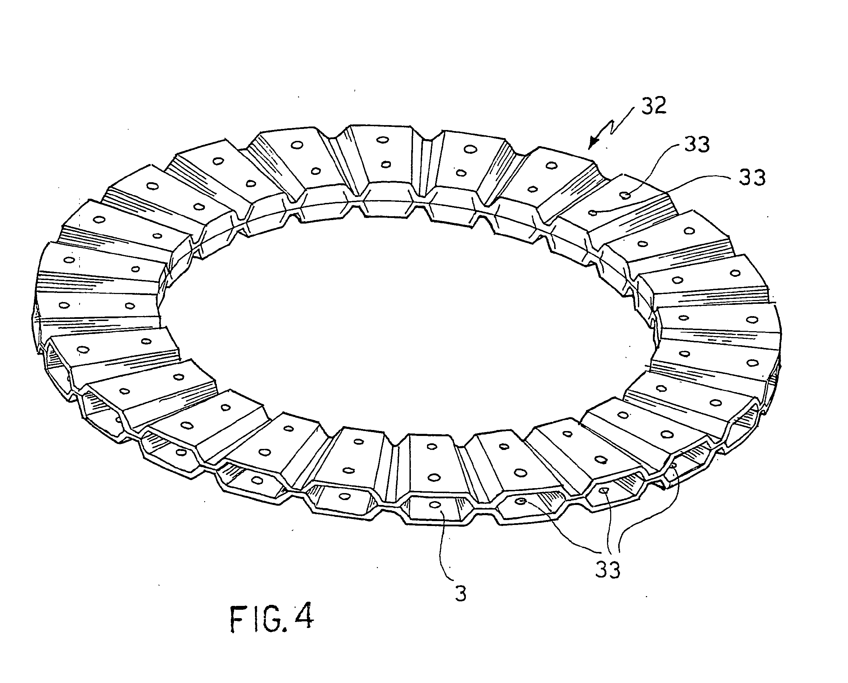

Figure 4 is a perspective view of a core according to the present invention;

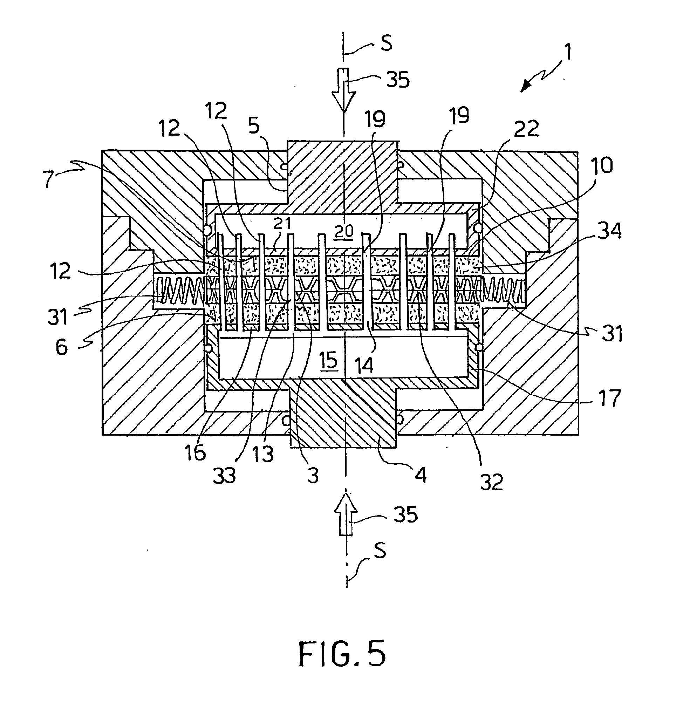

Figure 5 shows in diagrammatic cross-section a mould according to a third embodiment of the invention, suitable for supporting the core in figure 4;

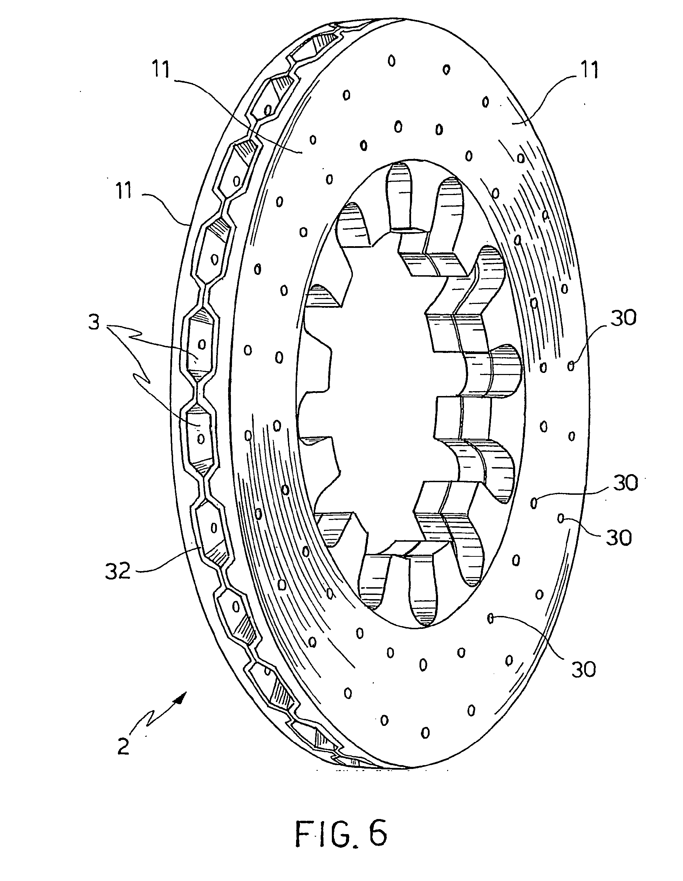

Figure 6 is a perspective view of a braking band obtained with the mould in Figure 5;

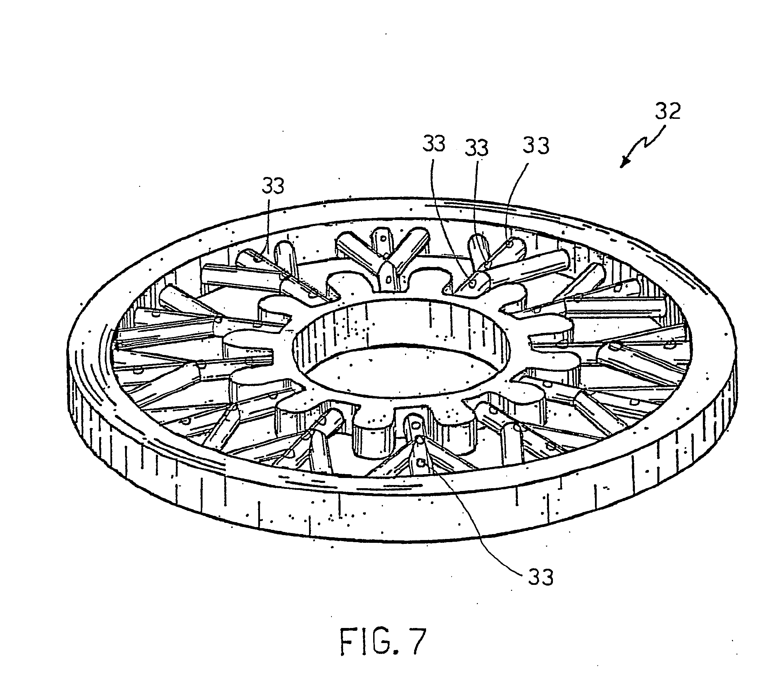

Figure 7 is a perspective view of a further core according to the present invention;

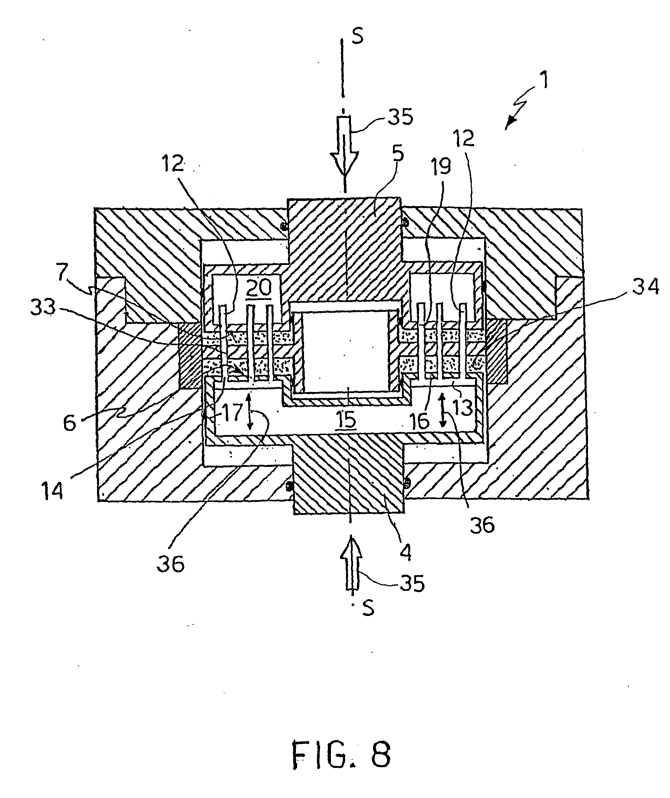

Figure 8 shows in diagrammatic cross-section, a further mould according to the invention, suitable for supporting the core in Figure 7;

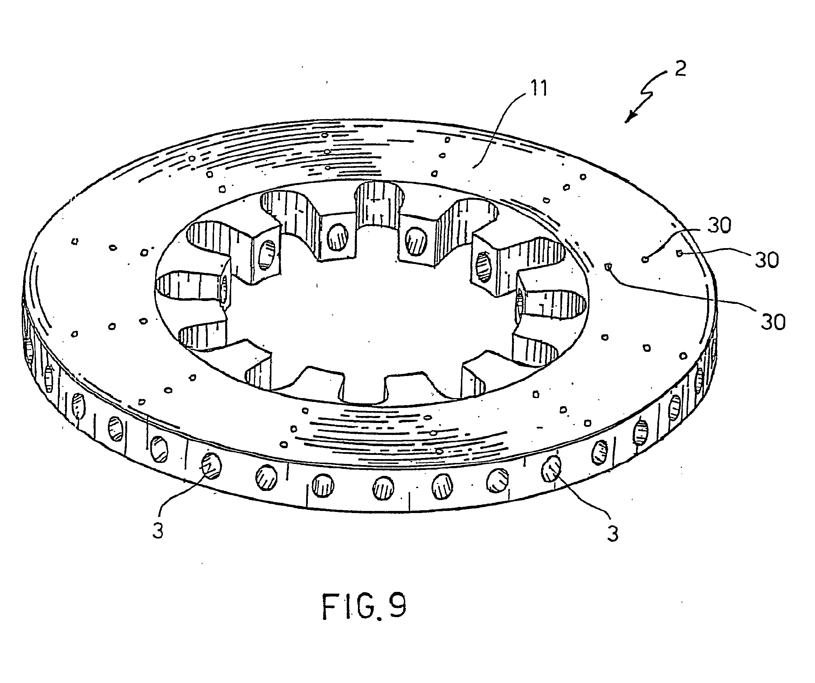

Figure 9 is a perspective view of a braking band obtained with the mould in Figure 8.

With reference to the drawings, a mould 1 for moulding braking bands 2 of composite material, with ventilation ducts 3, 30, comprises a first half-mould 4 having a first impression surface 6 and a second half-mould 5 having a second impression surface 7. Said first half-mould 4 and second half-mould 5 are movable towards each other, preferably along a central axis s which also constitutes the axis of symmetry of the braking band 2. The two impression surfaces 6 and 7, together with suitable containment means 8, 9, define a moulding cavity 10 which has the shape of the braking band 2. In particular, said impression surfaces 6 and 7, preferably facing one another and lying in planes substantially perpendicular to the central axis s, are intended to shape the friction surfaces 11 of the braking band 2. Preferably, the impression surfaces 6 and 7 have a substantially annular shape symmetrical with respect to the central axis s of the mould 1.

The first half-mould 4 comprises one or more pin members 12, extensible into a working position, in which they protrude from the first impression surface 6 into the moulding cavity 10, and retractable into a rest position which allows the extraction of the braking band 2 from the mould 1. Said pin members 12 have a shape suitable for producing, in the braking band 2, the ventilation ducts 3, 30 or portions thereof which open into at least one of its friction surfaces 11. Advantageously, the pin members 12 have an elongate shape, preferably rectilinear, and if necessary tapered so as to facilitate their insertion into the moulding cavity 10 and also their extraction from the moulded braking band 2. In order to facilitate the ejection of the braking band 2 from the mould 1, the pin members 12 are preferably retractable so as not to protrude into the moulding cavity 10. In other words, in the rest position, the pin members 12 preferably do not interfere with said moulding cavity 10. The term "rest position" is therefore understood to mean a position of the pin members 12 which allows the extraction of the band 2 from the mould 1. In such a position, the forward ends of the pin members may still partially protrude into the holes or ducts produced by them in the braking band, but only up to a point at which they do not substantially hinder the extraction of the latter from the mould.

According to one embodiment, a plurality of the pin members 12 is connected to a support member, preferably a support plate 13, in its turn connectable to the first half-mould 4 so as to be movable, preferably slidable, from the rest position to the working position and back.

According to a further embodiment, the pin members 12 have a length such as to extend, in the working position, from the first impression surface 6 at least to the second impression surface 7, allowing the formation of ventilation ducts 3, 30 or holes passing from a friction surface 11 of the braking band 2 to the friction surface opposed thereto. Advantageously, but not necessarily, the pin members 12 have a rectilinear shape and are disposed parallel to the central axis s of the mould 1 to form ventilation ducts 3, 30 or duct portions substantially parallel to the axis of symmetry of the braking band 2.

The pin members may have any shape of cross-section suitable for forming the ventilation ducts 3, 30, and also their openings in the friction surface 11. According to the preferred embodiment, the pin members 12 have a cross-section of substantially circular shape. Alternatively, they may also be oval or polygonal.

According to one embodiment of the invention, the pin members 12 are insertable into the moulding cavity 10 through suitable access openings 14 provided in the first half-mould 4. Said access openings 14 open into the first impression surface 6. Advantageously, the first half-mould further comprises at least one internal cavity 15 having a shape suitable for receiving the pin members 12 in their rest position and, preferably, also the support member 13.

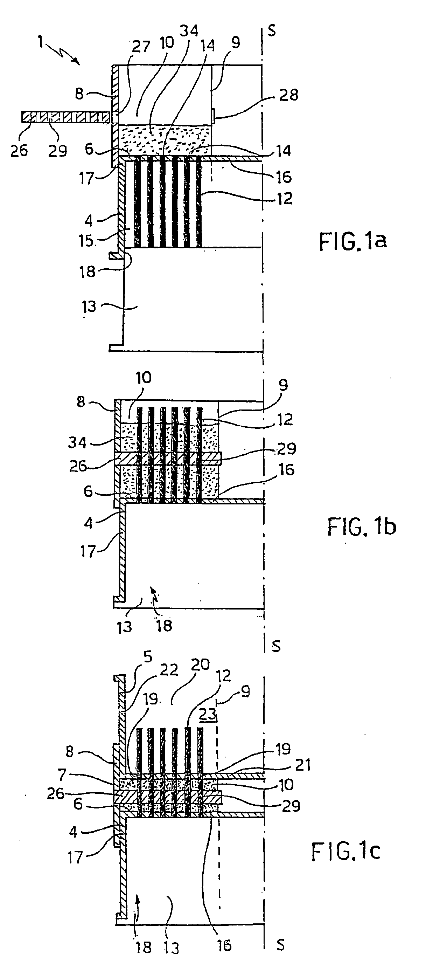

In the embodiment shown for example in Figure 1, the first half-mould 4 comprises a front wall 16, of which the surface facing towards the moulding cavity 10 constitutes said first impression surface 6, and a substantially cylindrical lateral wall 17. Said front wall 16 and lateral wall 17 at least partially define the aforesaid internal cavity 15. Said internal cavity 15 preferably has a shape substantially complementary to the shape of the support member 13, such as to constitute both a housing and a sliding guide for said member. The front wall 16 is provided with a plurality of through holes which form said access openings 14 for the pin members 12.

According to one embodiment, the internal cavity 15 has a mounting aperture 18, preferably disposed on a side of the first half-mould 4 opposed to the first impression surface 6, which allows the mounting or the insertion of the pin members 12 and of the support member 13 in the internal cavity 15, and also their replacement and the maintenance and cleaning of the internal cavity 15 and of the access openings 14.

Advantageously, the second half-mould 5 comprises one or more receiving openings 19 which open into the second impression surface 7. More generally, the half-mould opposed to the half-mould bearing the pin members comprises one or more receiving openings 19 which open into the impression surface opposed to the impression surface bearing the pin members. Said receiving openings 19 are suitable for receiving the forward ends of the pin members 12 extended into the working position.

Analogously to the first half-mould 4, the second half-mould 5 also preferably comprises a front wall 21, of which the surface facing towards the moulding cavity 10 constitutes said second impression surface 7, and a substantially cylindrical lateral wall 22, wherein said front wall 21 and lateral wall 22 at least partially define a cavity 23 within the second half-mould 5 which is suitable for receiving the forward ends of the pin members 12 through a plurality of through holes, provided in said front wall 21, which form the aforesaid receiving openings 19.

Advantageously, the cavity 20 of the second half-mould 5 has a maintenance opening 23, preferably disposed on a side of the second half-mould 5 opposed to the second impression surface 7, which allows access to said cavity 20 for any interventions for maintenance and cleaning of the cavity 20 and of the receiving openings 19.

The mould 1 according to the present invention has up to now been described with explicit reference to the first and second half-mould, of which only the first half-mould 4 comprises the extensible and retractable pin members 12. According to a further embodiment, the second half-mould 5 may also comprise such pin members 12 and may therefore be produced like the first half-mould 4.

Advantageously, both the half-moulds 4 and 5 in fact comprise said extensible and retractable pin members 12 protruding from the respective impression surfaces 6 and 7 and, preferably but not necessarily, both the impression surfaces 6 and 7 have said receiving openings 19 suitable for receiving the forward ends of the pin members 12 protruding respectively from the opposed impression surface.

With reference to the embodiment shown in the drawings, the containment means preferably comprise one or more containment walls 8, 9 substantially perpendicular to the impression surfaces 6, 7 and associated therewith to define said moulding cavity 10 radially. Advantageously, the containment walls comprise a radially outer wall 8 and a radially inner wall 9, substantially cylindrical, which extend about the central axis s of the mould 1 and are respectively associated with an outer periphery 24 and inner periphery 25 of the impression surfaces 6, 7.

According to a further embodiment of the invention, at least one of said containment walls 8, 9 is provided with passage openings 27, 28 which permit the insertion, into the moulding cavity 10, of one or more transverse pin members 26 suitable for forming ventilation ducts 3, 30 or portions thereof substantially transverse to the axis of symmetry of the braking band 2. These transverse pin members 26, analogously to the pin members 12, are extensible into a working position, in which they protrude from at least one of the containment walls 8, 9 into the moulding cavity 10, and retractable into a rest position which allows the extraction of the braking band 2 moulded by means of the mould 1. In the working position, the transverse pin members 26 advantageously lie in a plane perpendicular to the central axis s, or in a plane parallel to the impression surfaces 6, 7 and preferably equidistant therefrom.

The aforesaid passage openings 27, 28 of the containment walls 8, 9 comprise one or more access openings 27, preferably disposed in the outer wall 8, which permit the insertion of the transverse pin members 26 into the moulding cavity 10 and one or more receiving openings 28, preferably disposed in the inner wall 9 and suitable for receiving the forward ends of the transverse pin members 26 extended into the working position.

According to one embodiment, the transverse pin members 26, in the working position, extend from the outer wall 8 at least to the inner wall 9.

According to a further embodiment, the transverse pin members 26, in the working position, are disposed substantially radially with respect to the central axis s of the mould 1, producing substantially radial ventilation ducts 3.

The transverse pin members 26 have a shape which is elongate and preferably but not necessarily tapered such as to facilitate their insertion into the moulding cavity 10 and also their extraction from the moulded braking band 2.

A further embodiment of the invention provides for the transverse pin members 26 to be provided with suitable holes 29 for receiving or allowing to pass at least one of the pin members 12 or another transverse pin member 26 in the working position, such as to form braking bands 2 with branched ventilation ducts 3, 30 and in particular with radial ventilation ducts 3 and substantially axial holes 30 which open into the friction surfaces 11 and communicate with said radial ventilation ducts 3.

According to yet a further embodiment, the mould 1 comprises support means 31, preferably a resilient spring or an adjustable bearing surface, capable of supporting, within the moulding cavity 10, a core 32 of non-reusable type for producing transverse ventilation ducts 3, preferably perpendicular to the axis of symmetry s.

According to one feature of the present invention, the core 32 has one or more holes 33, analogous to the holes 29 of the transverse pin members 26 and suitable for receiving or allowing to pass at least one of the pin members 12 in the working position.

Advantageously, said holes 33 interfere with those portions of the core 32 which define the ventilation ducts 3 in the braking band 2, such as to form braking bands 2 with branched ventilation ducts 3, 30 and in particular with radial ventilation ducts 3 and substantially axial holes 30 which open into the friction surfaces 11 and communicate with said radial ventilation ducts 3.

The holes 33 in the core 32, like the holes 29 in the transverse pin members 26 and the access openings 14 and receiving openings 19 in the impression surfaces 6, 7 and the passage openings 27, 28 in the containment walls 8, 9, have a shape substantially complementary to the cross-section of the pin members 12 and of the transverse pin members 26, except for the clearances necessary to allow their insertion and their extraction from said openings and holes.

Advantageously, the core 32 is made of a material extractable from the moulded braking band 2, for example of a metal alloy capable of melting at a temperature of between 150°C and 450°C, or alternatively, of a composite material capable of intimately joining with further composite material 34 inserted into the moulding cavity 10 to form a sandwich structure constituting the braking band 2.

The fusible cores are preferably made of the materials described in International Patent Application PCT/IT01/00411 and the cores of composite material are preferably obtained with the materials described in International Patent Application PCT/ITOO/00543.

Advantageously, the mould 1 is further provided with main actuating means 35 for producing the reciprocal movement of the half-moulds 4 and 5. Such main actuating means 35 comprise, for example, one or more hydraulic and/or pneumatic piston/cylinder units or one or more linear motors.

To further advantage, the mould 1 comprises secondary actuating means 36 for producing the movement of the pin members 12 and/or of the transverse pin members 26, wherein the pin members 12 are arranged to be actuated independently of the actuation of the transverse pin members 26. The secondary actuating means 36 comprise, for example, manual actuating devices, one or more hydraulic and/or pneumatic piston/cylinder units or one or more linear motors.

To yet further advantage, the mould 1 comprises a control unit (not shown in the drawings) connected to the main and/or secondary actuating means and capable of actuating said actuating means such as to carry out the moulding of the braking band 2 according to the method which will be described hereinafter.

The mould 1 may be made of any metallic material, suitable for mechanical equipment of this type. The preferred embodiment provides for a mould 1 of aluminium or alloys thereof with pin members 12 of steel and transverse pin members 26 of aluminium or alloys thereof. Alternatively, the entire mould may be made of steel.

Referring particularly to Figures 1a - 1c, a description will now be given of the operation of the mould 1 for braking bands of composite material, with ventilation ducts, and also of the method for moulding said braking bands by means of the use of the aforesaid mould 1 according to the invention.

At the start of a moulding cycle, the two half-moulds 4 and 5 are away from each other and the moulding cavity 10 is accessible from the outside. The pin members 12 are in the rest position, or retracted into the moulding cavity 10. Through the action of the secondary actuating means 36, the pin members 12 slide from the rest position into the working position, that is, they enter the moulding cavity 10 through the access openings 14 of the first impression surface 6.

In the working position, those portions of the pin members 12 which are located inside the moulding cavity 10 define the shape of ventilation ducts 3, 30 of the braking band 2.

Before or after the insertion of the pin members 12 into the moulding cavity 10, the latter is filled with a mixture of material 34 to be moulded. Said mixture of material 34 preferably comprises bundles of filaments consisting essentially of carbon, which are broken up so as to have a length of less than 30 mm. These materials are mixed with an aggregating resin, such as, for example, polyurethane or more preferably a phenolic resin, pitch and other additives.

After the moulding cavity 10 has been filled with a predetermined quantity of the aforesaid mixture of material 34 to be moulded and after the pin members 12 have been transferred into their working position, the moulding cavity 10 is closed by bringing the two half-moulds 4 and 5 together. During this approach, the forward ends of the pin members 12 are preferably received by the receiving openings 19 of the impression surface opposed to that from which said pin members protrude. The mould 1 is now ready for the step of moulding a braking band 2 having ventilation ducts 30 or substantially axial holes which open into at least one, and preferably into both of the friction surfaces 11.

According to a further embodiment, before or after the filling of the moulding cavity with the material 34, the transverse pin members 26, through the action of the secondary actuating means 36, also slide from the rest position into the working position, that is, they enter the moulding cavity 10 through the passage openings 27, 28 of the containment walls 8, 9. In the working position, those portions of the transverse pin members 26 which are located inside the moulding cavity 10 define the shape of substantially radial ventilation ducts 3, 30 of the braking band 2 to be moulded.

According to a further embodiment, the transverse pin members 26 are transferred into their working position, and then the pin members 12 are transferred into their working position. Advantageously, the pin members 12, during their transfer from the rest position into the working position, are inserted into the holes 29 of the transverse pin members 26 which stand in the working position.

Alternatively, it is also possible first to transfer the pin members 12 from the rest position into a predetermined intermediate position, suitable for allowing the transfer of the transverse pin members 26 from the rest position into the working position, and then to transfer the transverse pin members 26 from the rest position into the working position and, finally, to transfer the pin members 12 from the intermediate position into the working position, preferably inserting them into the holes 29 of the transverse pin members 26.

The filling of the moulding cavity 10 with the material 34 to be moulded may take place before or after the insertion of the pin members 12 or of the transverse pin members 26.

According to a preferred embodiment, in a first step, a first layer of composite material is disposed within the moulding cavity, in a second step the transverse pin members 26 are inserted into the moulding cavity and the pin members 12 are inserted into the moulding cavity and into the holes of the transverse pin members, and in a third step, a second layer of composite material 34 is disposed within the moulding cavity. This guarantees complete filling of the moulding cavity by means of the correct amounts of mixture of composite material disposed respectively at the two plates of the band to be moulded.

According to yet a further embodiment, a core 32 of composite material is placed in the moulding cavity 10. The moulding cavity 10 is filled with at least two layers of the material 34, preferably with a lower layer before the positioning of the core 32 and an upper layer after the positioning of the core 32. Said layers are intended to form the braking band 2 such that the core is "sandwiched" between them.

According to yet a further embodiment, a core 32 of fusible material is placed in the moulding cavity 10. The moulding cavity 10 is filled with the material 34, preferably with a lower layer before the positioning of the core 32 and an upper layer after the positioning of the core 32. Said layers are intended to form the braking band 2 round the core which forms the radial ventilation ducts 3. After the placing of the core 32 in the moulding cavity, the pin members 12 are transferred into the working position, being inserted into the holes 33 of said cores 32.

After the moulding cavity 10 has been completely filled with the predetermined quantity of the material 34 to be moulded and the moulding cavity has been closed by bringing together the two half-moulds 4, 5, the mould 1 is ready for the moulding of the braking band 2 with substantially radial ventilation ducts 3 and substantially axial holes 30 which open into the friction surfaces 11.

The step of moulding the braking band 2 requires a predetermined pressure, a predetermined heating, and also means for defining the shape of said band 2.

The main actuating means 35 act on the half-moulds 4 and 5 which move towards each other, exerting on the mixture of material 34 a predetermined pressure suitable for the moulding of the braking band 2. The impression surfaces 6, 7, together with the containment walls 8, 9, define the shape of the braking band 2. To produce the temperature levels suitable for moulding, heating means are further provided outside the mould 1.

According to one embodiment of the invention, the mould 1 is inserted between two plates of a hydraulic press, in which said plates are provided with electrical resistances for heating.

According to a further embodiment of the invention, said heating means comprise electrical resistances and heat sensors disposed on the outer wall surface of the mould 1.

In the step of moulding of the braking band 2 by means of the mould 1, the mixture of material 34 within the moulding cavity 10 is heated to a temperature of from 80°C to 180°C, preferably from 100°C to 150°C, and subjected to a pressure ranging between 0.1 N/cm2 and 5 N/cm2, preferably between 0.5 N/cm2 and 1.0 N/cm2.

At the end of the moulding operation, the pin members 12, through the action of the secondary actuating means 36, return from the working position into the rest position. This means that said pin members 12 are extracted from the semi-processed braking band 2, thus freeing the holes or ventilation ducts formed by them. Moreover, when transverse pin members 26 are present, the pin members 12 must be extracted from the holes 29 of said transverse pin members 26 before said transverse pin members are extracted from the braking band 2. This extraction of the pin members 12 and transverse pin members 26 from the semi-processed braking band 2 is facilitated by their tapered shape.

The procedural steps described up to now may be controlled partially or completely by the control unit of the mould 1. To this end, said control unit may be connected to one or more of the following components of the mould:
- main actuating means 35;
- secondary actuating means 36;
- heating means;
- sensor means.

After the moulding cavity 10 is opened, the semi-processed braking band 2 is extracted, or ejected from the mould 1, preferably by means of a further travel of the first half-mould, or of the lower half-mould. After the ejection of the band 2, the mould 1 is again ready to start the next moulding cycle.

In the case where a fusible core 32 has been used, the braking band 2, disposed within the mould 1, is subjected to a first heating at a temperature such as to cause the hardening of the at least two layers of the mixture of material 34, so that said layers assume a solid three-dimensional structure. The semi-processed braking band 2 is then subjected to a second heating at a temperature such as to bring about the fusion of the material of the core, which is collected and preferably recycled.

The semi-processed braking band 2 is subjected to a first firing in a furnace at a temperature such as to bring about the carbonization or pyrolysis of the resin. This firing is carried out in a conventional furnace at a temperature which depends substantially on the type of binder used and which generally ranges between 900°C and 1200°C. Firing is carried out in the presence of a flow of inert gas such as nitrogen or argon and also an overpressure of 10-100 mbar, preferably 20-30 mbar.

During this step of the method, the material of the semi-processed braking band 2 acquires a greater porosity which becomes important for a following firing, during which infiltration of fused silicon therein takes place.

According to one mode of embodiment of the invention, the method may further comprise a step of finishing of the surface of the semi-processed band 2 issuing from the pyrolysis. This makes it possible to remove with conventional equipment any surface deformation of the braking band 2 so as to make it of the desired shape.

The finishing operation is preferably carried out dry, for example, with diamond, since the semi-processed braking band 2, which after the first firing has acquired a certain porosity, could absorb liquid substances if finishing were carried out in the wet.

The braking band 2 is then subjected to a second firing in the presence of silicon at a temperature such as to bring about the fusion of the bulk silicon and its infiltration into the pores of said braking band 2. The fused silicon reacts in part with the carbon of the braking band 2, forming silicon carbides which have the effect of improving the cohesion characteristics of the material. The firing (silication) is carried out under vacuum, reducing the pressure from 900 mbar to 300 mbar, preferably from 800 mbar to 500 mbar, and also at a temperature ranging between 1400°C and 1700°C.

At the end of the silication step, the braking band 2 is cooled, for example with argon or, preferably, with nitrogen, such that the residual silicon solidifies into small spheres that are easy to recover.

At the end, the braking band 2, with ventilation ducts, may if necessary be subjected to further finishing operations, for example surface finishing, which may be carried out dry or in the wet in a conventional manner.

The mould 1 for moulding braking bands 2 of composite material, with ventilation ducts, according to the invention has numerous advantages.

Owing to the presence of the pin members 12 and of the transverse pin members 26, said mould 1 is particularly simple and robust and guarantees a product of optimum quality.

Owing to its cyclical and automated operation, the mould 1 according to the invention is particularly suitable for volume production without requiring manual intervention at each moulding cycle.

The presence of only one mould 1, instead of different moulds for cores and bands, makes production easily repeatable and manageable and therefore increases the quality of the final product.

The mould 1 according to the invention may allow the omission of a complete production step, that is, the moulding of the cores. The omission of the production of cores and of the respective moulds for moulding them brings a significant saving in time and energy.

Moreover, the braking bands 2 obtained by means of the mould 1 according to the invention are not subject to dangerous detachment of the two plates, as occurs in the case where the two plates are conjoined.

The finishing of the braking band 2 by means of mechanical working affects only the outer and easily controllable surfaces. This reduces the number of sharp edges or cracks that are invisible and therefore the risk of brittle fracture of the braking band during use. The reduction of manual working to a minimum, for example of the drilling of the extremely hard material of the braking band, further provides a significant reduction in the production costs.

Obviously, an expert in the field, for the purpose of fulfilling contingent and specific requirements, may apply numerous modifications and variants to the mould 1 according to the present invention, all, however, included in the scope of protection of the invention, as defined by the following claims.

## Claims

1. A mould (1) for moulding braking bands (2) of composite material, with ventilation ducts (3, 30), comprising a first half-mould (4) having a first impression surface (6), a second half-mould (5) having a second impression surface (7), wherein said first half-mould (4) and second (5) half-mould are movable towards each other, substantially along a central axis (s), and said first impression surface (6) and second impression surface (7), together with suitable containment means (8, 9), define a moulding cavity (10) having the shape of the braking band (2), said first and second impression surface (6, 7) shaping the friction surfaces (11) of said band (2), wherein said first half-mould (4) comprises one or more pin members (12) extensible into a working position, in which they protrude into the moulding cavity (10), and retractable into a rest position which allows the extraction of the braking band (2) from the mould (1),
**characterized in that** in said working position, said pin members (12) protrude from said first impression surface (6) such that they shape duct portions (30) which open into said friction surfaces (11).

2. A mould (1) according to claim 1, wherein said pin members (12) are suitable for producing ventilation ducts (3, 30) or holes which open into said friction surfaces (11).

3. A mould (1) according to claim 1 or 2, wherein said impression surfaces (6, 7) lie in planes substantially perpendicular to the central axis (s).

4. A mould (1) according to any one of the preceding claims, wherein, in the rest position, said pin members (12) do not interfere with the moulding cavity (10).

5. A mould (1) according to any one of the preceding claims, wherein the pin members (12) are insertable into said moulding cavity (10) through one or more access openings (14), opening into the first impression surface (6).

6. A mould (1) according to any one of the preceding claims, wherein the forward ends of said pin members (12) are insertable into one or more receiving openings (19), opening into said second impression surface (7).

7. A mould (1) according to any one of the preceding claims, wherein the pin members (12) are connected to a support member (13) slidably connected to said first half-mould (4) and said pin members (12) are transferable from the working position to the rest position and vice versa by means of the movement of the support member (13).

8. A mould (1) according to claim 7, wherein said support member (13) is at least partially received in an internal cavity (15) of the first half-mould (4).

9. A mould (1) according to any one of the preceding claims, wherein, in the working position, the pin members (12) are inserted into the moulding cavity (10), extending from the first impression surface (6) at least to the second impression surface (7).

10. A mould (1) according to any one of the preceding claims, wherein, in the working position, the pin members (12) are disposed parallel to the central axis (s) of the mould (1) which constitutes the axis of symmetry of the braking band (2).

11. A mould (1) according to any one of the preceding claims, wherein said pin members (12) have a cross-section of substantially circular, oval or polygonal shape.

12. A mould (1) according to any one of the preceding claims, wherein said containment means comprise containment walls (8, 9) substantially perpendicular to the impression surfaces (6, 7).

13. A mould (1) according to claim 12, comprising one or more transverse pin members (26) suitable for forming ventilation ducts (3) substantially transverse to the axis of symmetry (s) and extensible into a working position, in which they protrude from one of the containment walls (8, 9) into the moulding cavity (10), and retractable into a rest position, in which they allow the extraction of the braking band (2) from the mould (1).

14. A mould (1) according to claim 13, wherein said transverse pin members (26) are insertable into the moulding cavity (10) through one or more passage openings (27, 28) in said containment walls (8, 9).

15. A mould (1) according to any one of the preceding claims when dependent on claim 13, wherein, in the working position, said transverse pin members (26) lie substantially in a plane perpendicular to the central axis (s) and equidistant from the two impression surfaces (6, 7).

16. A mould (1) according to any one of the preceding claims when dependent on claim 13, wherein, in the working position, the transverse pin members (26) extend from a radially outer wall (8) at least to a radially inner wall (9) of said containment walls (8, 9) and are distributed at a substantially constant pitch in a circumferential direction of said outer wall (8).

17. A mould (1) according to any one of the preceding claims when dependent on claim 13, wherein said transverse pin members (26) are disposed radially with respect to the central axis (s), forming in the braking band (2) substantially radial ventilation ducts (3).

18. A mould (1) according to any one of the preceding claims when dependent on claim 13, wherein at least one of said transverse pin members (26) has at least one hole (29) for receiving or allowing to pass at least one of said pin members (12), such as to produce branched ventilation ducts.

19. A mould (1) according to any one of the preceding claims, wherein at least one of said pin members (12) and/or transverse pin members (26) has at least one passage opening for receiving or allowing to pass at least one other of said pin members (12) and/or transverse pin members (26).

20. A mould (1) according to any one of the preceding claims, comprising support means (31) capable of supporting, in the moulding cavity (10), a core (32) of non-reusable type.

21. A mould (1) according to claim 20, wherein said support means are resilient means, preferably springs (31).

22. A mould (1) according to either of claims 20 and 21, wherein at least one of said pin members (12) is insertable in at least one hole (33) in said core (32).

23. A mould (1) according to any one of the preceding claims, wherein the pin members (12) and/or the transverse pin members (26) are tapered to facilitate their insertion into the moulding cavity (10) and their extraction from the moulded braking band (2).

24. A mould (1) according to any one of the preceding claims, wherein at least one of the two half-moulds (4; 5) is movable by respective main actuating means (35) along said central axis (s) towards, respectively, the other half-mould (5; 4), said main actuating means (35) comprising one or more hydraulic or pneumatic piston/cylinder units or a linear motor.

25. A mould (1) according to any one of the preceding claims, wherein said pin members (12) and/or said transverse pin members (26) are arranged to be actuated by secondary actuating means (36), comprising one or more hydraulic or pneumatic piston/cylinder units or linear motors or manual actuating devices.

26. A mould (1) according to any one of the preceding claims, wherein said transverse pin members (26) and said pin members (12) are arranged to be actuated independently.

27. A mould (1) according to claim 25 or 26, comprising a control unit for actuating said secondary actuating means such as to
- transfer the pin members (12) from the rest position into a predetermined intermediate position between the rest position and the working position, allowing the transfer of the transverse pin members (26) from the rest position into the working position;
- then transfer the transverse pin members (26) from the rest position into the working position,
- then transfer the pin members (12) from the intermediate position into the working position.

28. A mould (1) according to one of claims 25, 26 or 27, wherein the control unit is capable of actuating said secondary actuating means such as to
- transfer the pin members (12) from the working position into the rest position and
- then transfer the transverse pin members (26) from the working position into the rest position.

29. A mould (1) according to any one of the preceding claims, made of aluminium or alloys thereof.

30. A mould (1) according to any one of the preceding claims, comprising heating means, preferably electrical resistances.

31. A mould according to any one of claims 20 to 22 and further comprising a core (32) for forming ventilation ducts (3) in a braking band (2) of composite material, wherein said core (32) can be placed in a moulding cavity (10) of said mould (1), said core (32) comprising one or more holes (33) for receiving at least one pin member (12) of said mould

32. A mould (1) according to claim 31, wherein said core (32) is made of a metal alloy capable of melting at a temperature ranging between 150° and 450°C.

33. A mould (1) according to claim 31, wherein said core (32) is made of composite material and capable of joining with further composite material (34) to form a sandwich structure constituting the braking band (2).

34. A method for obtaining a braking band (2) of composite material, with ventilation ducts (3, 30), comprising the following steps:
- providing a mould (1) according to any one of claims 1 to 33 ;
- transferring the pin members (12) from the rest position into the working position, wherein said pin members (12) protrude from said impression surface (6) into the moulding cavity (10),
- filling the moulding cavity (10) of the mould (1) with a mixture (34) of composite material;
- moulding the braking band (2) by applying a predetermined pressure and temperature;
- transferring the pin members (12) from the working position into the rest position which allows the extraction of the braking band (2) from the mould (1);
- extracting the braking band (2) from the mould (1).

35. A method according to claim 34, further comprising the steps of:
- transferring transverse pin members (26) from the rest position into the working position;
- transferring the transverse pin members (26) from the working position into the rest position, extracting them substantially from the braking band (2).

36. A method according to claim 35, comprising the following steps:
- transferring the pin members (12) from the rest position into a predetermined intermediate position, suitable for allowing the transfer of the transverse pin members (26) from the rest position into the working position, then transferring the transverse pin members (26) from the rest position into the working position, then transferring the pin members (12) from the intermediate position into the working position;
- after the depositing of one or more layers of a mixture (34) of composite material within the moulding cavity (10) and the moulding of the braking band (2), transferring the pin members (12) from the working position into the rest position, extracting them substantially from the braking band (2), then transferring the transverse pin members (26) from the working position into the rest position, extracting them substantially from the braking band (2).

37. A method according to claim 35 or 36, comprising the step of inserting at least one of the pin members (12) into a hole (29) in at least one transverse pin member (26) and, after moulding, extracting the pin member (12) from said hole (29) in the transverse pin member (26).

38. A method according to any one of the preceding claims when dependent on claim 34, comprising the steps of:
- providing a mould (1) with a core (32) according to one of claims 31 to 33 and placing said core (32) in the moulding cavity (10) of the mould (1) ;
- filling the moulding cavity (10) with at least two layers of material (34), which will form the braking band (2), such that said core (32) is sandwiched between said at least two layers,
- inserting the pin members (12) in suitable holes (33) provided in said core (32).

39. A method according to claim 38, comprising the steps of :
- carrying out a first heating of the mould (1) to a temperature such as to bring about hardening of said at least two layers of material (34), until said at least two layers assume a solid three-dimensional structure,
- subjecting the semi-processed braking band obtained in the preceding step to a second heating to a temperature such as to bring about the fusion of the material of the core (32); and collecting said fused core.

40. A method according to any one of the preceding claims when dependent on claim 34, further comprising the step of pyrolysis of the braking band (2).

41. A method according to the preceding claim, further comprising the step of silication of the braking band (2).

42. A method according to the preceding claim, further comprising one or more steps of mechanical finishing of the outer surfaces of the braking band (2).

## Patentansprüche

1. Form (1) zum Formen von Bremsbändern (2) aus Verbundwerkstoff mit Belüftungskanälen (3, 30), umfassend eine erste Formhälfte (4) mit einer ersten Prägungsfläche (6), eine zweite Formhälfte (5) mit einer zweiten Prägungsfläche (7), wobei die erste Formhälfte (4) und die zweite Formhälfte (5) im Wesentlichen entlang einer Mittelachse (s) zueinander bewegbar sind, und die erste Prägungsfläche (6) und die zweite Prägungsfläche (7) zusammen mit geeigneten Einschlussmitteln (8, 9) einen Formhohlraum (10) definieren, der die Form des Bremsbandes (2) aufweist, die erste und die zweite Prägungsfläche (6, 7) die Reibungsflächen (11) des Bandes (2) formen, wobei die erste Formhälfte (4) ein oder mehr Stiftelemente (12) aufweist, die in eine Arbeitsposition, in welcher sie in den Formhohlraum (10) vorstehen, ausfahrbar und in eine Ruheposition, welche die Entnahme des Bremsbandes (2) aus der Form (1) ermöglicht, zurückziehbar sind, **dadurch gekennzeichnet, dass** die Stiftelemente (12) in der Arbeitsposition derart von der ersten Prägungsfläche (6) vorstehen, dass sie Kanalabschnitte (30) formen, welche sich in die Reibungsflächen (11) öffnen.

2. Form (1) gemäß Anspruch 1, wobei die Stiftelemente (12) zum Erzeugen von Belüftungskanälen (3, 30) oder Löchern geeignet sind, welche sich in die Reibungsflächen (11) öffnen.

3. Form (1) gemäß Anspruch 1 oder 2, wobei die Prägungsflächen (6, 7) in Ebenen im Wesentlichen senkrecht zur Mittelachse (s) liegen.

4. Form (1) gemäß einem der vorhergehenden Ansprüche, wobei die Stiftelemente (12) in der Ruheposition nicht in den Formhohlraum (10) eingreifen.

5. Form (1) gemäß einem der vorhergehenden Ansprüche, wobei die Stiftelemente (12) durch eine oder mehr Zugangsöffnungen (14), die sich in die erste Prägungsfläche (6) öffnen, in den Formhohlraum (10) einführbar sind.

6. Form (1) gemäß einem der vorhergehenden Ansprüche, wobei die vorderen Enden der Stiftelemente (12) in eine oder mehr Aufnahmeöffnungen (19) einführbar sind, die sich in die zweite Prägungsfläche (7) öffnen.

7. Form (1) gemäß einem der vorhergehenden Ansprüche, wobei die Stiftelemente (12) mit einem Trägerelement (13) verbunden sind, das mit der ersten Formhälfte (4) verschiebbar verbunden ist, und die Stiftelemente (12) mittels der Bewegung des Trägerelements (13) von der Arbeitsposition in die Ruheposition und umgekehrt versetzbar ist.

8. Form (1) gemäß Anspruch 7, wobei das Trägerelement (13) wenigstens teilweise in einen inneren Hohlraum (15) der ersten Formhälfte (4) aufgenommen ist.

9. Form (1) gemäß einem der vorhergehenden Ansprüche, wobei die Stiftelemente (12) in der Arbeitsposition in den Formhohlraum (10) eingeführt sind und sich von der ersten Prägungafläche (6) wenigstens bis zur zweiten Prägungsfläche (7) erstrecken.

10. Form (1) gemäß einem der vorhergehenden Ansprüche, wobei die Stiftelemente (12) in der Arbeitsposition parallel zur Mittelachse (s) der Form (1) angeordnet sind, welche die Symmetrieachse des Bremsbandes (2) darstellt.

11. Form (1) gemäß einem der vorhergehenden Ansprüche, wobei die Stiftelemente (12) einen Querschnitt einer im wesentlichen kreisrunden, ovalen oder polygonalen Form aufweisen.

12. Form (1) gemäß einem der vorhergehenden Ansprüche, wobei die Einschlussmittel Einschlusswände (8, 9) im Wesentlichen senkrecht zu den Prägungsflächen (6, 7) umfassen.

13. Form (1) gemäß Anspruch 12, umfassend ein oder mehr quer verlaufende Stiftelemente (26), die zum Bilden von Belüftungskanälen (3) im Wesentlichen quer zur Symmetrieachse (s) geeignet sind und in eine Arbeitsposition, in welcher sie von einer der Einschlusswände (8, 9) in den Formhohlraum (10) vorstehen, ausfahrbar und in eine Ruheposition, in welcher sie die Entnahme des Bremsbandes (2) aus der Form (1) ermöglichen, zurückziehbar sind.

14. Form (1) gemäß Anspruch 13, wobei die quer verlaufenden Stiftelemente (26) durch eine oder mehr Durchgangsöffnungen (27, 28) in den Einschlusswänden (8, 9) in den Formhohlraum (10) einführbar sind.

15. Form (1) gemäß einem der vorhergehenden Ansprüche, wenn abhängig von Anspruch 13, wobei die quer verlaufenden Stiftelemente (26) in der Arbeitsposition im Wesentlichen in einer Ebene senkrecht zur Mittelachse (s) und abstandsgleich von den beiden Prägungsflächen (6, 7) liegen.

16. Form (1) gemäß einem der vorhergehenden Ansprüche, wenn abhängig von Anspruch 13, wobei sich die quer verlaufenden Stiftelemente (26) in der Arbeitsposition von einer radial äußeren Wand (8) wenigstens bis zu einer radial inneren Wand (9) der Einschlusswände (8, 9) erstrecken und in einem im Wesentlich konstanten Schrittabstand in einer Umfangsrichtung der Außenwand (8) verteilt sind.

17. Form (1) gemäß einem der vorhergehenden Ansprüche, wenn abhängig von Anspruch 13, wobei die quer verlaufenden Stiftelemente (26) in Bezug auf die Mittelachse (s) radial angeordnet sind und im Bremsband (2) im Wesentlichen radiale Belüftungskanäle (3) bilden.

18. Form (1) gemäß einem der vorhergehenden Ansprüche, wenn abhängig von Anspruch 13, wobei wenigstens eines der quer verlaufenden Stiftelemente (26) wenigstens ein Loch (29) zum Aufnehmen oder Durchlassen wenigstens eines der Stiftelemente (12) aufweist, um verzweigte Belüftungskanäle zu erzeugen.

19. Form (1) gemäß einem der vorhergehenden Ansprüche, wobei wenigstens eines der Stiftelemente (12) und/oder quer verlaufenden Stiftelemente (26) wenigstens eine Durchgangsöffnung zum Aufnehmen oder Durchlassen eines anderen der Stiftelemente (12) und/oder quer verlaufenden Stiftelemente (26) aufweist.

20. Form (1) gemäß einem der vorhergehenden Ansprüche, umfassend Haltemittel (31), die zum Halten eines Kerns (32) der nicht-wiederverwendbaren Art im Formhohlraum (10) imstande ist.

21. Form (1) gemäß Anspruch 20, wobei die Haltemittel elastische Mittel, vorzugsweise Federn (31), sind.

22. Form (1) gemäß einem von Anspruch 20 und 21, wobei wenigstens eines der Stiftelemente (12) in wenigstens ein Loch (33) im Kern (32) einführbar ist.

23. Form (1) gemäß einem der vorhergehenden Ansprüche, wobei die stiftelemente (12) und/oder die quer verlaufenden Stiftelemente (26) sich verjüngen, um ihre Einführung in den Formhohlraum (10) und ihr Herausziehen aus dem geformten Bremsband (2) zu erleichtern.

24. Form (1) gemäß einem der vorhergehenden Ansprüche, wobei wenigstens eine der beiden Formhälften (4; 5) durch jeweilige Hauptbetätigungsmittel (35) entlang der Mittelachse (s) zur jeweils anderen Formhälfte (5; 4) bewegbar ist, und die Hauptbetätigungsmittel (35) eine oder mehr hydraulische oder pneumatische Kolben/Zylinder-Einheiten oder einen Linearmotor umfassen.

25. Form (1) gemäß einem der vorhergehenden Ansprüche, wobei die Stiftelemente (12) und/oder die quer verlaufenden Stiftelemente (26) so ausgelegt sind, dass sie durch Zusatzbetätigungsmittel (36) betätigt werden, die eine oder mehr hydraulische oder pneumatische Kolben/Zylinder-Einheiten oder Linearmotoren oder manuelle Betätigungsvorrichtungen umfassen.

26. Form (1) gemäß einem der vorhergehenden Ansprüche, wobei die quer verlaufenden Stiftelemente (26) und die Stiftelemente (12) so ausgelegt sind, dass sie unabhängig betätigt werden.

27. Form (1) gemäß Anspruch 25 oder 26, umfassend eine Steuereinheit zum Betätigen der Zusatzbetätigungsmitteln, um
- die Stiftelemente (12) von der Ruheposition in eine vorbestimmte Zwischenposition zwischen der Ruheposition und der Arbeitsposition zu versetzen und die Versetzung der quer verlaufenden Stiftelemente (26) von der Ruheposition in die Arbeitsposition zu ermöglichen;
- dann die quer verlaufenden Stiftelemente (26) von der Ruheposition in die Arbeitsposition zu versetzen,
- dann die Stiftelemente (12) von der Zwischenposition in die Arbeitsposition zu versetzen.

28. Form (1) gemäß einem von Anspruch 25, 26 oder 27, wobei die Steuereinheit zum Betätigen der Zusatzbetätigungselemente imstande ist,
- die Stiftelemente (12) von der Arbeitsposition in die Ruheposition zu versetzen und
- dann die quer verlaufenden Stiftelemente (26) von der Arbeitsposition in die Ruheposition zu versetzen.

29. Form (1) gemäß einem der vorhergehenden Ansprüche, hergestellt aus Aluminium oder Legierungen davon.

30. Form (1) gemäß einem der vorhergehenden Ansprüche, umfassend Heizmittel, vorzugsweise elektrische Widerstände.

31. Form gemäß einem der Ansprüche 20 bis 22 und ferner umfassend einen Kern (32) zum Bilden von Belüftungskanälen (3) in einem Bremsband (2) aus Verbundwerkstoff, wobei der Kern (32) in einem Formhohlraum (10) der Form (1) angeordnet werden kann, und der Kern (32) ein oder mehr Löcher (33) zum Aufnehmen wenigstens eines Stiftelements (12) der Form (1) umfasst.

32. Form (1) gemäß Anspruch 31, wobei der Kern (32) aus einer Metalllegierung hergestellt ist, die bei einer Temperatur im Bereich von 150°C bis 450°C schmelzen kann.

33. Form (1) gemäß Anspruch 31, wobei der Kern (32) aus Verbundwerkstoff hergestellt ist und sich mit einem weiteren Verbundwerkstoff (34) verbinden kann, um eine Sandwichstruktur zu bilden, die das Bremsband (2) darstellt.

34. Verfahren zum Erhalten eines Bremsbandes (2) aus Verbundwerkstoff mit Belüftungskanälen (3, 30), umfassend die folgenden Schritte:
- Bereitstellen einer Form (1) gemäß einem der Ansprüche 1 bis 33;
- Versetzen der Stiftelemente (12) von der Ruheposition in die Arbeitsposition, wobei die Stiftelemente (12) von der Prägungafläche (6) in den Formhohlraum (10) vorstehen,
- Füllen des Formhohlraums (10) der Form (1) mit einer Mischung (34) aus Verbundwerkstoff;
- Formen des Bremsbandes (2) durch Anwenden eins vorbestimmten Drucks und einer vorbestimmten Temperatur;
- Versetzen der Stiftelemente (12) von der Arbeitsposition in die Ruheposition, welche die Entnahme des Bremsbandes (2) aus der Form (1) ermöglicht;
- Entnehmen des Bremsbandes (2) aus der Form (1).

35. Verfahren gemäß Anspruch 34, ferner umfassend die folgenden Schritte:
- Versetzen von quer verlaufenden Stiftelementen (26) von der Ruheposition in die Arbeitsposition;
- Versetzen der quer verlaufenden Stiftelemente (26) von der Arbeitsposition in die Ruheposition, wobei diese im Wesentlichen aus dem Bremsband (2) herausgezogen werden.

36. Verfahren gemäß Anspruch 35, ferner umfassend die folgenden Schritte:
- Versetzen der Stiftelemente (12) von der Ruheposition in eine vorbestimmte Zwischenposition, die geeignet ist, die Versetzung der quer verlaufenden Stiftelemente (26) von der Ruheposition in die Arbeitsposition zu ermöglichen, dann Versetzen der quer verlaufenden Stiftelemente (26) von der Ruheposition in die Arbeitsposition, dann Versetzen der Stiftelemente (12) von der Zwischenposition in die Arbeitsposition;
- Versetzen, nach dem Abscheiden einer oder mehrerer Schichten einer Mischung (34) aus Verbundwerkstoff innerhalb des Formhohlraums (10) und dem Formen des Bremsbandes (2), der Stiftelemente (12) von der Arbeitsposition in die Ruheposition, wobei diese im Wesentlichen aus dem Bremsband (2) herausgezogen werden, dann Versetzen der quer verlaufenden Stiftelemente (26) von der Arbeitsposition in die Ruheposition, wobei diese im Wesentlichen aus dem Bremsband (2) herausgezogen werden.

37. Verfahren gemäß Anspruch 35 oder 36, umfassend den Schritt des Einführens wenigstens eines der Stiftelemente (12) in ein Loch (29) in wenigstens einem quer verlaufenden Stiftelement (26) und Herausziehens, nach dem Formen, des Stiftelements (12) aus dem Loch (29) in dem quer verlaufenden Stiftelement (26).

38. Verfahren gemäß einem der vorhergehenden Ansprüche, wenn abhängig von Anspruch 34, umfassend die folgenden Schritte:
- Bereitstellen einer Form (1) mit einem Kern (32) gemäß einem der Ansprüche 31 bis 33 und Anordnen des Kerns (32) im Formhohlraum (10) der Form (1);
- Füllen des Formhohlraums (10) mit wenigstens zwei Schichten von Werkstoff (34), welcher das Bremsband (2) bilden wird, derart dass der Kern (32) zwischen den wenigstens zwei Schichten angeordnet ist,
- Einführen der Stiftelemente (12) in geeignete Löcher (33), die im Kern (32) vorgesehen sind.

39. Verfahren nach Anspruch 38, umfassend die folgenden Schritte:
- Ausführen einer ersten Erwärmung der Form (1) auf eine Temperatur, um ein Härten der wenigstens zwei Schichten von Werkstoff (34) zu bewirken, bis die wenigstens zwei Schichten eine feste dreidimensionale Struktur annehmen,
- Unterziehen des halbverarbeiteten Bremsbandes, das im vorhergehenden Schritt erhalten wurde, einer zweiten Erwärmung auf eine Temperatur, um die Schmelzung des Werkstoffs des Kerns (32) zu bewirken ; und Auffangen des geschmolzenen Kerns.

40. Verfahren gemäß einem der vorhergehenden Ansprüche, wenn von Anspruch 34 abhängig, ferner umfassend den Schritt der Pyrolyse des Bremsbandes (2).

41. Verfahren gemäß dem vorhergehenden Anspruch, ferner umfassend den Schritt der Silicierung des Bremsbandes (2).

42. Verfahren gemäß dem vorhergehenden Anspruch, ferner umfassend einen oder mehr Schritte der mechanischen Feinbearbeitung der Außenflächen des Bremsbandes (2).

## Revendications

1. Moule (1) pour mouler des bandes de freinage (2) de matériau composite, avec des conduits de ventilation (3, 30), comprenant un premier demi-moule (4) ayant une première surface d'impression (6), un second demi-moule (5) ayant une seconde surface d'impression (7), dans lequel ledit premier demi-moule (4) et le second (5) demi-moule sont déplaçables l'un vers l'autre, sensiblement le long d'un axe central (s), et desdites première surface d'impression (6) et seconde surface d'impression (7), conjointement avec des moyens de confinement adaptés (8, 9), définissent une cavité de moulage (10) ayant la forme de la bande de freinage (2), lesdites première et seconde surfaces d'impression (6, 7) formant les surfaces de frottement (11) de ladite bande (2), dans lequel ledit premier demi-moule (4) comprend un ou plusieurs éléments de tige (12) extensibles dans une position de travail, dans laquelle ils font saillie dans la cavité de moulage (10), et rétractables dans une position de repos qui permet l'extraction de la bande de freinage (2) depuis le moule (1), **caractérisé en ce que**
dans ladite position de travail, lesdits éléments de tige (12) font saillie depuis ladite première surface d'impression (6) de sorte qu'ils forment des parties de conduit (30) qui débouchent dans lesdites surfaces de frottement (11).

2. Moule (1) selon la revendication 1, dans lequel lesdits éléments de tige (12) sont adaptés pour produire des conduits (3, 30) ou trous de ventilation qui débouchent dans lesdites surfaces de frottement (11).

3. Moule (1) selon la revendication 1 ou 2, dans lequel lesdites surfaces d'impression (6, 7) sont situées dans des plans sensiblement perpendiculaires à l'axe central (s).

4. Moule (1) selon l'une quelconque des revendications précédentes, dans lequel, dans la position de repos, lesdits éléments de tige (12) n'interfèrent pas avec la cavité de moulage (10).

5. Moule (1) selon l'une quelconque des revendications précédentes, dans lequel les éléments de tige (12) sont insérables dans ladite cavité de moulage (10) à travers un ou plusieurs ouvertures d'accès (14), débouchant dans la première surface d'impression (6).

6. Moule (1) selon l'une quelconque des revendications précédentes, dans lequel les extrémités avant desdits éléments de tige (12) sont insérables dans une ou plusieurs ouvertures de réception (19), débouchant dans ladite seconde surface d'impression (7).

7. Moule (1) selon l'une quelconque des revendications précédentes, dans lequel les éléments de tige (12) sont raccordés à un élément de support (13) raccordé de manière coulissante audit premier demi-moule (4) et lesdits éléments de tige (12) sont transférables de la position de travail à la position de repos et réciproquement au moyen du déplacement de l'élément de support (13).

8. Moule (1) selon la revendication 7, dans lequel ledit élément de support (13) est au moins partiellement reçu dans une cavité interne (15) du premier demi-moule (4).

9. Moule (1) selon l'une quelconque des revendications précédentes, dans lequel, dans la position de travail, les éléments de tige (12) sont insérés dans la cavité de moulage (10), s'étendant depuis la première surface d'impression (6) au moins jusqu'à la seconde surface d'impression (7).

10. Moule (1) selon l'une quelconque des revendications précédentes, dans lequel, dans la position de travail, les éléments de tige (12) sont disposés parallèlement à l'axe central (s) du moule (1) qui constitue l'axe de symétrie de la bande de freinage (2).

11. Moule (1) selon l'une quelconque des revendications précédentes, dans lequel lesdits éléments de tige (12) ont une section transversale de forme sensiblement circulaire, ovale ou polygonale.

12. Moule (1) selon l'une quelconque des revendications précédentes, dans lequel lesdits moyens de confinement comprennent des parois (8, 9) sensiblement perpendiculaires aux surfaces d'impression (6, 7).

13. Moule (1) selon la revendication 12, comprenant un ou plusieurs éléments de tige transversaux (26) adaptés pour former des conduits de ventilation (3) sensiblement transversaux à l'axe de symétrie (s) et extensibles dans une position de travail, dans laquelle ils font saillie depuis une des parois de confinement (8, 9) dans la cavité de moulage (10), et rétractables dans une position de repos, dans laquelle ils permettent l'extraction de la bande de freinage (2) depuis le moule (1).

14. Moule (1) selon la revendication 13, dans lequel lesdits éléments de tige transversaux (26) sont insérables dans la cavité de moulage (10) à travers une ou plusieurs ouvertures de passage (27, 28) dans lesdites parois de confinement (8, 9).

15. Moule (1) selon l'une quelconque des revendications précédentes dépendantes de la revendication 13, dans lequel, dans la position de travail, lesdits éléments de tige transversaux (26) sont situés sensiblement dans un plan perpendiculaire à l'axe central (s) et équidistants par rapport aux deux surfaces d'impression (6, 7).

16. Moule (1) selon l'une quelconque des revendications précédentes dépendantes de la revendication 13, dans lequel, dans la position de travail, les éléments de tige transversaux (26) s'étendent depuis une paroi radialement externe (8) au moins jusqu'à une paroi radialement interne (9) desdites parois de confinement (8, 9) et sont répartis à un espacement sensiblement constant dans une direction circonférentielle de ladite paroi externe (8).

17. Moule (1) selon l'une quelconque des revendications précédentes dépendante de la revendication 13, dans lequel lesdits éléments de tige transversaux (26) sont disposés radialement par rapport à l'axe central (s), formant dans la bande de freinage (2) des conduits de ventilation sensiblement radiaux (3).

18. Moule (1) selon l'une quelconque des revendications précédentes dépendantes de la revendication 13, dans lequel au moins un desdits éléments de tige transversaux (26) a au moins un trou (29) pour recevoir ou laisser passer au moins un desdits éléments de tige (12), de manière à produire des conduits de ventilation ramifiés.

19. Moule (1) selon l'une quelconque des revendications précédentes, dans lequel au moins un desdits éléments de tige (12) et/ou éléments de tige transversaux (26) a au moins une ouverture de passage pour recevoir ou laisser passer au moins un autre desdits éléments de tige (12) et/ou éléments de tige transversaux (26).

20. Moule (1) selon l'une quelconque des revendications précédentes, comprenant des moyens de support (31) capables de soutenir, dans la cavité de moulage (10), un noyau (32) de type non réutilisable.

21. Moule (1) selon la revendication 20, dans lequel lesdits moyens de support sont des moyens résilients, de préférence des ressorts (31).

22. Moule (1) selon une des revendications 20 et 21, dans lequel au moins un desdits éléments de tige (12) est insérable dans au moins un trou (33) dans ledit noyau (32).

23. Moule (1) selon l'une quelconque des revendications précédentes, dans lequel les éléments de tige (12) et/ou les éléments de tige transversaux (26) sont coniques afin de faciliter leur insertion dans la cavité de moulage (10) et leur extraction de la bande de freinage moulée (2).

24. Moule (1) selon l'une quelconque des revendications précédentes, dans lequel au moins un des deux demi-moules (4 ; 5) est déplaçable par des moyens d'actionnement principaux respectifs (35) le long dudit axe central (s) vers, respectivement, l'autre demi-moule (5 ; 4), lesdits moyens d'actionnement principaux (35) comprenant une ou plusieurs unités piston/cylindre pneumatiques ou un moteur linéaire.

25. Moule (1) selon l'une quelconque des revendications précédentes, dans lequel lesdits éléments de tige (12) et/ou lesdits éléments de tige transversaux (26) sont agencés de manière à être actionnés par des moyens d'actionnement secondaires (36), comprenant une ou plusieurs unités piston/cylindre pneumatiques ou des moteurs linéaires ou des dispositifs d'actionnement manuels.

26. Moule (1) selon l'une quelconque des revendications précédentes, dans lequel lesdits éléments de tige transversaux (26) et lesdits éléments de tige (12) sont agencés de manière à être actionnés indépendamment.

27. Moule (1) selon la revendication 25 ou 26, comprenant une unité de commande pour actionner lesdits moyens d'actionnement secondaires de manière à
- transférer les éléments de tige (12) de la position de repos dans une position intermédiaire prédéterminée entre la position de repos et la position de travail, permettant le transfert des éléments de tige transversaux (26) de la position de repos dans la position de travail ;
- puis transférer les éléments de tige transversaux (26) de la position de repos dans la position de travail ;
- puis transférer les éléments de tige (12) de la position intermédiaire dans la position de travail.

28. Moule (1) selon une des revendications 25, 26 ou 27, dans lequel l'unité de commande est capable d'actionner lesdits moyens d'actionnement secondaires de manière à
- transférer les éléments de tige (12) de la position de travail dans la position de repos et
- ensuite transférer les éléments de tige transversaux (26) de la position de travail dans la position de repos.

29. Moule (1) selon l'une quelconque des revendications précédentes, constitué d'aluminium ou d'alliages de celui-ci.

30. Moule (1) selon l'une quelconque des revendications précédentes, comprenant des moyens de chauffage, de préférence des résistances électriques.

31. Moule selon l'une quelconque des revendications 20 à 22 et comprenant en outre un noyau (32) pour former des conduits de ventilation (3) dans une bande de freinage (2) de matériau composite, dans lequel ledit noyau (32) peut être placé dans une cavité de moulage (10) dudit moule (1), ledit noyau (32) comprenant un ou plusieurs trous (33) pour recevoir au moins un élément de tige (12) dudit moule (1).

32. Moule (1) selon la revendication 31, dans lequel ledit noyau (32) est constitué d'un alliage métallique capable de fondre à une température dans la plage entre 150°C et 450°C.

33. Moule (1) selon la revendication 31, dans lequel ledit noyau (32) est constitué de matériau composite et peut être assemblé à un autre matériau composite (34) pour former une structure de sandwich constituant la bande de freinage (2).

34. Procédé pour obtenir une bande de freinage (2) de matériau composite, avec des conduits de ventilation (3, 30), comprenant les étapes suivantes consistant à :
- produire un moule (1) selon l'une quelconque des revendications 1 à 33 ;
- transférer les éléments de tige (12) de la position de repos dans la position de travail, dans laquelle lesdits éléments de tige (12) font saillie depuis ladite surface d'impression (6) dans la cavité de moulage (10) ;
- remplir la cavité de moulage (10) du moule (1) avec un mélange (34) de matériau composite ;
- mouler la bande de freinage (2) en appliquant une pression et une température prédéterminées ;
- transférer les éléments de tige (12) de la position de travail dans la position de repos de manière à permettre l'extraction de la bande de freinage (2) depuis le moule (1) ;
- extraire la bande de freinage (2) du moule (1).

35. Procédé selon la revendication 34, comprenant en outre les étapes consistant à :
- transférer les éléments de tige transversaux (26) de la position de repos dans la position de travail ;
- transférer les éléments de tige transversaux (26) de la position de travail dans la position de repos, de manière à extraire sensiblement ceux-ci de la bande de freinage (2).

36. Procédé selon la revendication 35, comprenant les étapes suivantes consistant à :
- transférer les éléments de tige (12) de la position de repos dans une position intermédiaire prédéterminée, adaptée pour permettre le transfert des éléments de tige transversaux (26) de la position de repos dans la position de travail, puis transférer les éléments de tige transversaux (26) de la position de repos dans la position de travail, puis transférer les éléments de tige (12) de la position intermédiaire dans la position de travail ;
- après le dépôt d'une ou plusieurs couches d'un mélange (34) de matériau composite dans la cavité de moulage (10) et le moulage de la bande de freinage (2), transférer les éléments de tige (12) de la position de travail dans la position de repos, de manière à extraire sensiblement ceux-ci de la bande de freinage (2), puis transférer les éléments de tige transversaux (26) de la position de travail dans la position de repos, de manière à extraire sensiblement ceux-ci de la bande de freinage (2).

37. Procédé selon la revendication 35 ou 36, comprenant l'étape consistant à insérer au moins un des éléments de tige (12) dans un trou (29) dans au moins un élément de tige transversal (26) et, après moulage, extraire l'élément de tige (12) dudit trou (29) dans l'élément de tige transversal (26).

38. Procédé selon l'une quelconque des revendications précédentes dépendante de la revendication 34, comprenant les étapes consistant à :
- produire un moule (1) avec un noyau (32) selon une des revendications 31 à 33 et placer ledit noyau (32) dans la cavité de moulage (10) du moule (1) ;
- remplir la cavité de moulage (10) avec au moins deux couches de matériau (34), qui forment la bande de freinage (2), de sorte que ledit noyau (32) est pris en sandwich entre lesdites au moins deux couches,
- insérer les éléments de tige (12) dans des trous adaptés (33) formés dans ledit noyau (32).

39. Procédé selon la revendication 38, comprenant les étapes consistant à :
- conduire un premier chauffage du moule (1) à une température provoquant le durcissement desdites au moins deux couches de matériau (34), jusqu'à ce que lesdites au moins deux couches obtiennent une structure tridimensionnelle solide,
- soumettre la bande de freinage semi-finie obtenue dans l'étape précédente à un second chauffage à une température provoquant la fusion du matériau du noyau (32) ; et collecter ledit noyau fondu.

40. Procédé selon l'une quelconque des revendications précédentes dépendante de la revendication 34, comprenant en outre l'étape de pyrolyse de la bande de freinage (2).

41. Procédé selon la revendication précédente, comprenant en outre l'étape de silicatation de la bande de freinage (2).

42. Procédé selon la revendication précédente, comprenant en outre une ou plusieurs étapes de finition mécanique des surfaces externes de la bande de freinage (2).
